Europäisches Patentamt

European Patent Office

Office européen des brevets

(19)

(11) **EP 1 342 995 A2**

(12) **EUROPÄISCHE PATENTANMELDUNG**

(43) Veröffentlichungstag:
 **10.09.2003 Patentblatt 2003/37**

(51) Int Cl.⁷: **G01F 1/84**

(21) Anmeldenummer: 03004019.0

(22) Anmeldetag: **24.02.2003**

(84) Benannte Vertragsstaaten:
 **AT BE BG CH CY CZ DE DK EE ES FI FR GB GR
 HU IE IT LI LU MC NL PT SE SI SK TR**
 Benannte Erstreckungsstaaten:
 **AL LT LV MK RO**

(30) Priorität: **06.03.2002 DE 10209689
 08.05.2002 DE 10220734**

(71) Anmelder: **Krohne AG
 4019 Basel (CH)**

(72) Erfinder: **Hussain, Yousif, Dr.
 Northampton, NN3 3DA (GB)**

(74) Vertreter: **Gesthuysen, von Rohr & Eggert
 Patentanwälte
 Postfach 10 13 54
 45013 Essen (DE)**

(54) **Coriolis-Massendurchflussmesser mit schwingungsfreier Rohrleitungssystemkopplung**

(57) Dargestellt und beschrieben ist ein Massendurchflußmeßgerät, das nach dem Coriolis-Prinzip arbeitet, mit einem ein strömendes Medium führenden, im wesentlichen geraden Coriolis-Meßrohr (1), mit zwei das strömende Medium fiihrenden, im wesentlichen geraden Anschlußrohren (2), mit mindestens einem dem Coriolis-Meßrohr (1) zugeordneten, das Coriolis-Meßrohr (1) anregenden Schwingungserzeuger (3), mit mindestens einem dem Coriolis-Meßrohr (1) zugeordneten, Coriolis-Kräfte und/oder auf Coriolis-Kräften beruhende Coriolis-Schwingungen erfassenden Meßwertaufnehmer (4) und mit einem Kompensationszylinder (5), wobei das Coriolis-Meßrohr (1) innerhalb des Kompensationszylinders (5) angeordnet ist, der Kompensationszylinder (5) an seinen beiden Endbereichen jeweils mit einem Endbereich des Coriolis-Meßrohrs (1) mechanisch fest verbunden ist, das Coriolis-Meßrohr (1) in jedem seiner Endbereiche jeweils in ein Anschlußrohr (2) übergeht, die Anschlußrohre (2) außerhalb des Kompensationszylinders (5) vorgesehen sind und das Massendurchflußmeßgeräts mittels an den außenseitigen Endbereichen der Anschlußrohre (2) vorgesehener Befestigungseinrichtungen in ein Rohrleitungssystem eingebaut sind.

Erfindungsgemäß ist vorgesehen, daß die Formel

$$\frac{Mf^2}{ei/l^3} > 5{,}5$$

für jedes Anschlußrohr (2) erfüllt ist, wobei $M$ die Masse des Kompensationszylinders (5), $f$ die Eigenfrequenz des mit Wasser gefüllten Coriolis-Meßrohrs, $e$ das Elastizitätsmodul der Anschlußrohre (2), $i$ das Flächenträgheitsmoment der Anschlußrohre (2) und $l$ die Länge der Anschlußrohre (2) ist. Auf diese Weise wird eine "weiche" Ankopplung des Systems, bestehend aus Coriolis-Meßrohr (1), Kompensationszylinder (5), Schwingungserzeuger (3) und Meßwertaufnehmer (4), an die Umgebung, also insbesondere an das Rohrleitungssystem, in das das Massendurchflußmeßgerät eingebaut ist, erzielt, so daß es zu einer stark verringerten Einkopplung von Schwingungen aus dem Massendurchflußmeßgerät in das Rohrleitungssystem kommt.

Printed by Jouve, 75001 PARIS (FR)

**(Forts. nächste Seite)**

Fig. 1

**Beschreibung**

Die Erfindung betrifft ein Massendurchflußmeßgerät, das nach dem Coriolis-Prinzip arbeitet, mit einem ein strömendes Medium führenden, im wesentlichen geraden Coriolis-Meßrohr, mit zwei das strömende Medium führenden, im wesentlichen geraden Anschlußrohren, mit mindestens einem dem Coriolis-Meßrohr zugeordneten, das Coriolis-Meßrohr anregenden Schwingungserzeuger, mit mindestens einem dem Coriolis-Meßrohr zugeordneten, Coriolis-Kräfte und/oder auf Coriolis-Kräften beruhende Coriolis-Schwingungen erfassenden Meßwertaufnehmer und mit einem Kompensationszylinder, wobei das Coriolis-Meßrohr innerhalb des Kompensationszylinders angeordnet ist, der Kompensationszylinder an seinen beiden Endbereichen jeweils mit einem Endbereich des Coriolis-Meßrohrs mechanisch fest verbunden ist, das Coriolis-Meßrohr in jedem seiner beiden Endbereiche jeweils in ein Anschlußrohr übergeht, die Anschlußrohre außerhalb des Kompensationszylinders vorgesehen sind und das Massendurchflußmeßgerät mittels an den außenseitigen Endbereichen der Anschlußrohre vorgesehener Befestigungseinrichtungen in ein Rohrleitungssystem einbaubar ist. Ein solches Massendurchflußmeßgerät ist z. B. aus der Fachzeitschrift "atp - Automatisierungstechnische Praxis 40 (1998) 9, S. 24 - 29" bekannt.

Eingangs ist ausgeführt worden, daß zu dem Massendurchflußmeßgerät, von dem die Erfindung ausgeht, mindestens ein dem Coriolis-Meßrohr "zugeordneter" Schwingungserzeuger und mindestens ein dem Coriolis-Meßrohr "zugeordneter" Meßwertaufnehmer gehören. In der Regel sind der Schwingungserzeuger, jedenfalls ein Teil des Schwingungserzeugers, und der Meßwertaufnehmer, jedenfalls ein Teil des Meßwertaufnehmers, mit dem Coriolis-Meßrohr verbunden. Dies ist jedoch nicht zwingend erforderlich, so daß der Ausdruck "zugeordnet" anstatt des Ausdrucks "verbunden" verwendet worden ist.

Bei Massendurchflußmeßgeräten, die nach dem Coriolis-Prinzip arbeiten, unterscheidet man grundsätzlich zwischen einerseits solchen, deren Coriolis-Meßrohr zumindest im wesentlichen gerade ausgeführt ist, und andererseits solchen, deren Coriolis-Meßrohr schleifenförmig ausgeführt ist. Außerdem unterscheidet man bei den in Rede stehenden Massendurchflußmeßgeräten zwischen einerseits solchen, die nur ein Coriolis-Meßrohr aufweisen, und andererseits solchen, die zwei Coriolis-Meßrohre aufweisen; bei den Ausführungsformen mit zwei Coriolis-Meßrohren können diese strömungstechnisch in Reihe oder parallel zueinander liegen.

In jüngerer Zeit haben sich zunehmend Massendurchflußmeßgeräte mit nur einem einzigen im wesentlichen geraden Coriolis-Meßrohr durchgesetzt. Nach dem Coriolis-Prinzip arbeitende Massendurchflußmeßgeräte, die nur ein einziges gerades Coriolis-Meßrohr aufweisen, haben gegenüber solchen Massendurchflußmeßgeräten, die entweder zwei gerade Coriolis-Meßrohre oder ein schleifenförmiges Coriolis-Meßrohr aufweisen, erhebliche Vorteile: Gegenüber Massendurchflußmeßgeräten mit zwei geraden Coriolis-Meßrohren ist der Vorteil vor allem darin zu sehen, daß Strömungsteiler bzw. Strömungszusammenführer, die bei Massendurchflußmeßgeräten mit zwei Coriolis-Meßrohren erforderlich sind, nicht benötigt werden. Gegenüber Massendurchflußmeßgeräten mit einem schleifenförmigen Coriolis-Meßrohr bzw. mit zwei schleifenförmigen Coriolis-Meßrohren ist der Vorteil vor allem darin zu sehen, daß ein gerades Coriolis-Meßrohr einfacher als ein schleifenförmiges Coriolis-Meßrohr hergestellt werden kann, der Druckabfall bei einem geraden Coriolis-Meßrohr geringer ist als bei einem schleifenförmigen Coriolis-Meßrohr und ein gerades Coriolis-Meßrohr besser gereinigt werden kann als ein schleifenförmiges Coriolis-Meßrohr.

Massendurchflußmeßgeräte, die nach dem Coriolis-Prinzip arbeiten und ein gerades Coriolis-Meßrohr aufweisen, sind jedoch mit einem grundsätzlichen Problem behaftet: Nach dem Coriolis-Prinzip arbeitende Massendurchflußmeßgeräte erfordern, daß das Coriolis-Meßrohr bzw. die Coriolis-Meßrohre mit Hilfe wenigstens eines Schwingungserzeugers in Schwingung versetzt werden, schließlich resultieren aus der Tatsache, daß das Coriolis-Meßrohr bzw. die Coriolis-Meßrohre schwingen, und daraus, daß das Coriolis-Meßrohr bzw. die Coriolis-Meßrohre von einem Medium durchströmt werden, die Coriolis-Kräfte bzw. die Coriolis-Schwingungen. Bei Massendurchflußmeßgeräten mit zwei geraden Coriolis-Meßrohren bzw. mit einem schleifenförmigen Coriolis-Meßrohr oder mit zwei schleifenförmigen Coriolis-Meßrohren sind die Coriolis-Meßrohre bzw. die schwingungswirksamen Teile der schleifenförmigen Coriolis-Meßrohre identisch ausgeführt, derart angeordnet und werden derart erregt, daß sie gegeneinander schwingen. Damit kann erreicht werden, daß das schwingende System nach außen hin insgesamt nicht als schwingendes System wirksam wird. Die Lage des Massenmittelpunkts dieses Systems bleibt ortsfest und auftretende Kräfte werden damit kompensiert. Folglich werden in das Rohrleitungssystem, in das ein solches Massendurchflußmeßgerät eingebaut ist, keine Schwingungen eingeleitet, so daß aus dem Rohrleitungssystem zurückreflektierte Schwingungen das Meßergebnis nicht beeinflussen können.

Bei nach dem Coriolis-Prinzip arbeitenden Massendurchflußmeßgeräten, die nur ein einziges gerades Coriolis-Meßrohr aufweisen, ist die zuvor erläuterte Funktionsweise von gegeneinander schwingenden Coriolis-Meßrohren bzw. deren Abschnitten natürlich nicht gegeben. Somit bleibt bei einem Massendurchflußmeßgerät mit nur einem einzigen Coriolis-Meßrohr der Massenmittelpunkt nicht ortsfest, so daß die auftretenden Kräfte nicht kompensiert werden. Daraus folgt, daß Schwingungen in das Rohrleitungssystem, in das das Massendurchflußmeßgerät eingebaut ist, übertragen werden und von dort wieder zurückreflektiert werden können.

Um die zuvor erläuterte Problematik, die nach dem Coriolis-Prinzip arbeitenden Massendurchflußmeßgeräten mit nur einem einzigen geraden Coriolis-Meßrohr eigen ist, wenigstens zu verringern, kann, wie bei dem eingangs beschriebenen Massendurchflußmeßgerät, von dem die Erfindung ausgeht, ein Kompensationszylinder vorgesehen sein. Mit einer solchen Maßnahme können die Kräfte, die ansonsten auf die Befestigungseinrichtungen einwirken, mit denen das Massendurchflußmeßgerät in das Rohrleitungssystem eingebaut ist, deutlich reduziert werden.

Um eine weitere Verbesserung zu erreichen, ist in der DE 197 10 806 A1 vorgeschlagen worden, bei einem Massendurchflußmeßgerät mit nur einem einzigen geraden Coriolis-Meßrohr, das einen Kompensationszylinder aufweist, ein zum Mittelpunkt des Coriolis-Meßrohrs symmetrisch angeordnetes und symmetrisch ausgeführtes Ausgleichssystem auf dem Kompensationszylinder vorzusehen. Dieses Ausgleichssystem ist dabei so auszulegen, daß die Schwingungsamplitude des Kompensationszylinders sehr klein ist, vorzugsweise gegen Null geht.

Ferner ist in der DE 198 40 782 vorgeschlagen worden, dafür Sorge zu tragen, daß sowohl die Anregungs-Schwingungen als auch die Coriolis-Schwingungen des Coriolis-Meßrohres innerhalb des Kompensationszylinders ausgeglichen sind. Dies bedeutet, daß weder die Anregungs-Schwingungen noch die Coriolis-Schwingungen den Kompensationszylinder beeinflussen. Der Kompensationszylinder wird also weder durch die Anregungs-Schwingungen noch durch die Coriolis-Schwingungen zu einer Kompensationszylinderschwingung angeregt, so daß der Kompensationszylinder unbeeinflußt und damit ruhig bleibt. Eine weitere Verbesserung eines nach dem Coriolis-Prinzip arbeitenden Massendurchflußmeßgeräts mit nur einem im wesentlichen geraden Coriolis-Meßrohr ist also dadurch erreichbar, daß der Massenmittelpunkt der Gesamtheit aller innerhalb des Kompensationszylinders vorgesehenen Bauteile ortsfest bleibt, also der Massenmittelpunkt der aus dem Coriolis-Meßrohr, dem Schwingungserzeuger oder den Schwingungserzeugern und dem Meßwertaufnehmer oder den Meßwertaufnehmern bestehenden Gesamtheit ortsfest bleibt. Befinden sich innerhalb des Kompensationszylinders weitere Bauteile, so müssen diese Bauteile natürlich in diese Konzeption einbezogen werden.

Weiterhin sind aus der EP 0 759 542 A1 und der EP 0 831 306 A1 Massendurchflußmeßgeräte mit Gewichten bekannt, die an dem Kompensationszylinder angebracht sind, um dessen Eigenfrequenz an die Eigenfrequenz des Coriolis-Meßrohres anzupassen. Außerdem ist aus der US 5,796,010 eine am Kompensationszylinder angebrachte zusätzliche Masse bekannt.

Mit dieser Masse soll erreicht werden, daß die Eigenfrequenz der Haltevorrichtung für das Coriolis-Meßrohr, zu der auch der Kompensationszylinder gehört, verringert wird. Für die Anordnung der zusätzlichen Masse werden zwei alternative Vorgehensweisen beschrieben, nämlich einerseits die Anbringung der zusätzlichen Masse in der Mitte des Kompensationszylinders und andererseits, alternativ dazu, die Anbringung von zusätzlichen Massen an den Enden des Kompensationszylinders.

Aus der DE 199 08 072 A1 ist schließlich ein Massendurchflußmeßgerät, das nach dem Coriolis-Prinzip arbeitet, mit einem einzigen geraden Coriolis-Meßrohr bekannt, wobei als massenmäßige Ausgleichsmaßnahme für die Anregungs-Schwingung eine erste Ausgleichsmasse vorgesehen und in der senkrecht zur Längsachse stehenden Mittelebene des Kompensationszylinders mit diesem verbunden ist und als massenmäßige Ausgleichsmaßnahme für die Coriolis-Schwingung eine zweite Ausgleichsmasse und eine dritte Ausgleichsmasse vorgesehen sind und die zweite Ausgleichsmasse und die dritte Ausgleichsmasse als endseitige Bereiche des Kompensationszylinders ausgebildet sind. Auf diese Weise soll erreicht werden, daß das aus dem Coriolis-Meßrohr und dem Kompensationszylinder bestehende schwingungsfähige System sowohl für die Anregungs-Schwingungen des Coriolis-Meßrohres als auch für die Coriolis-Schwingungen des Coriolis-Meßrohres massenmäßig zumindest weitestgehend ausgeglichen ist.

Der Erfindung liegt nun die Aufgabe zugrunde, ein Massendurchflußmeßgerät, das nach dem Coriolis-Prinzip arbeitet und genau ein einziges gerades Coriolis-Meßrohr aufweist, anzugeben, bei dem auf eine einfache alternative Weise eine Einkopplung von Schwingungen in das Rohrleitungssystem, in das das Massendurchflußmeßgerät eingebaut ist, weitestgehend vermieden wird.

Ausgehend von dem eingangs beschriebenen Massendurchflußmeßgerät ist das erfindungsgemäße Massendurchflußmeßgerät dadurch gekennzeichnet, daß die Formel

$$\frac{Mf^2}{ei/l^3} > 5.5$$

für jedes Anschlußrohr erfüllt ist, wobei $M$ die Masse des Kompensationszylinders, $f$ die Eigenfrequenz des mit Wasser gefüllten Coriolis-Meßrohrs, $e$ das Elastizitätsmodul der Anschlußrohre, $i$ das Flächenträgheitsmoment der Anschlußrohre und $l$ die Länge der Anschlußrohre ist. Dabei wird die Masse in kg, die Eigenfrequenz in Hz, das Elastizitätsmodul in N/m², das Flächenträgheitsmoment in m⁴ und die Länge in m angegeben.

Erfindungsgemäß ist also vorgesehen, den Kompensationszylinder möglichst schwer auszubilden, während die Ankopplung der Einheit, bestehend aus Kompensationszylinder und Coriolis-Meßrohr sowie Schwingungserzeuger und Meßwertaufnehmer, über die Anschlußrohre an das Rohrleitungssystem, in das das Massendurchflußmeßgerät eingebaut ist, eher "weich" angekoppelt ist. Durch die sehr schwere Ausbildung des Kompensationszylinders wird man im allgemeinen auch einen sehr steifen Kompensationszylinder erhalten, so daß es aufgrund der Befestigung des Kompensationszylinders an den Enden des Coriolis-Meßrohrs nur zu Anregungs- und Coriolis-Schwingungen des Coriolis-Meßrohrs selbst kommen wird; die Anschlußrohre "spüren" von diesen Schwingungen praktisch nichts.

Aufgrund der "weich" ausgebildeten Anschlußrohre kommt es jedoch zu einer Schwingung des Systems, bestehend aus Coriolis-Meßrohr und Kompensationszylinder sowie Schwingungserzeuger und Meßwertaufnehmer, gegenüber dem Rohrleitungssystem, in das das Massendurchflußmeßgerät eingebaut ist. Dabei wird die Eigenfrequenz des Systems aus Coriolis-Meßrohr, Kompensationszylinder, Schwingungserzeuger und Meßwertaufnehmer eine wesentlich geringere Eigenfrequenz aufweisen als das Coriolis-Meßrohr. Auf diese Weise wird die Kopplung zwischen dem System, bestehend aus Coriolis-Meßrohr, Kompensationszylinder, Schwingungserzeuger und Meßwertaufnehmer, mit der Umgebung, also insbesondere dem Rohrleitungssystem, in das das Massendurchflußmeßgerät eingebaut ist, stark reduziert.

Eine weitere Reduzierung von aus dem Massendurchflußmeßgerät in die Umgebung eingekoppelten Schwingungen, insbesondere in das Rohrleitungssystem, in das das Massendurchflußmeßgerät eingebaut ist, wird gemäß einer bevorzugten Weiterbildung der Erfindung dadurch erzielt, daß neben der zuvor genannten Formel auch die Formel

$$\frac{EI/L^3}{ei/l^3} > 12$$

für beide Anschlußrohre erfüllt ist, wobei $E$ das Elastizitätsmodul des Kompensationszylinders, $I$ das Flächenträgheitsmoment des Kompensationszylinders und $L$ die Länge des Kompensationszylinders ist.

Die zuvor genannten Formeln liefern insbesondere dann ein optimales Design für ein Massendurchflußmeßgerät, das nach dem Coriolis-Prinzip arbeitet und nur ein einziges gerades Coriolis-Meßrohr aufweist, wenn der Kompensationszylinder außer seinen Verbindungen mit den Endbereichen des Coriolis-Meßrohrs keine weiteren Verbindungen zu anderen Bauteilen des Massendurchflußmeßgeräts aufweist und es sich bei den Schwingungen des Coriolis-Meßrohrs um Biegeschwingungen handelt, also Schwingungen in einer Ebene. Ist dies gewährleistet, so wird eine Ankopplung des aus Coriolis-Meßrohr, Kompensationszylinder, Schwingungserzeuger und Meßwertaufnehmer bestehenden Systems nach außen nur noch sehr gering sein.

Ist dann gemäß einer bevorzugten Weiterbildung der Erfindung ein Gehäuse vorgesehen, das das Coriolis-Meßrohr, den Kompensationszylinder und die Anschlußrohre umschließt und an den äußeren Endbereichen der Anschlußrohre mechanisch befestigt ist, so ist es nicht erforderlich, daß dieses Gehäuse sehr massiv ist, um die Schwingungen aufzunehmen. Vielmehr genügt ein einfaches Gehäuse, das lediglich als mechanischer Schutz dient, wodurch das Gesamtgewicht des Massendurchflußmeßgeräts erheblich reduziert werden kann.

Grundsätzlich ist es möglich, die Anschlußrohre von ihrem Material und von ihren Abmessungen her von dem Coriolis-Meßrohr verschieden auszubilden. Gemäß einer bevorzugten Weiterbildung der Erfindung ist jedoch vorgesehen, daß der Innendurchmesser, die Wandstärke und das Material des Coriolis-Meßrohrs dem Innendurchmesser, der Wandstärke und dem Material der Anschlußrohre entspricht. Dies bedeutet gleichsam, daß als Coriolis-Meßrohr einerseits und Anschlußrohre andererseits ein gemeinsames durchgängiges Rohr vorgesehen ist, wobei der Abschnitt "Coriolis-Meßrohr" und die Abschnitte "Anschlußrohre" nur dadurch festgelegt und voneinander getrennt sind, daß der Kompensationszylinder an dem durchgängigen Rohr befestigt ist. Anders ausgedrückt ist das Coriolis-Meßrohr der Abschnitt des durchgängigen Rohres, der in dem Kompensationszylinder angeordnet ist und der die Anregungsund die Coriolis-Schwingungen ausführt, während die Anschlußrohre die außerhalb des Kompensationszylinders liegenden Bereiche des durchgängigen Rohres sind, mit denen die Verbindung zu dem Rohrleitungssystem erfolgt, in das das Massendurchflußmeßgerät eingebaut ist.

Der Einbau des Massendurchflußmeßgeräts in das Rohrleitungssystem kann auf unterschiedliche Weise erfolgen. Gemäß einer bevorzugten Weiterbildung der Erfindung ist jedoch vorgesehen, daß die an den außenseitigen Endbereichen der Anschlußrohre vorgesehenen Befestigungseinrichtungen, mit denen das Massendurchflußmeßgerät in das Rohrleitungssystem eingebaut ist, als Flansche ausgebildet sind, so daß der Einbau des Massendurchflußmeßgeräts in das Rohrleitungssystem mit an diesem ausgebildeten Flanschen einfach zu bewerkstelligen ist.

Im einzelnen gibt es nun eine Vielzahl von Möglichkeiten, das erfindungsgemäße Massendurchflußmeßgerät auszugestalten und weiterzubilden. Dazu wird auf die nachfolgende detaillierte Beschreibung eines bevorzugten Ausführungsbeispiels der Erfindung unter Bezugnahme auf die Zeichnung verwiesen.

In der Zeichnung zeigt

Fig. 1  ein Massendurchflußmeßgerät gemäß einem bevorzugten Ausführungsbeispiel der Erfindung im Schnitt,

Fig. 2  schematisch das Massendurchflußmeßgerät gemäß dem bevorzugten Ausführungsbeispiel der Erfindung mit seinen erfindungswesentlichen Parametern und

Fig. 3  schematisch die Schwingungsankopplung bei dem Massendurchflußmeßgerät gemäß dem bevorzugten Ausführungsbeispiel der Erfindung.

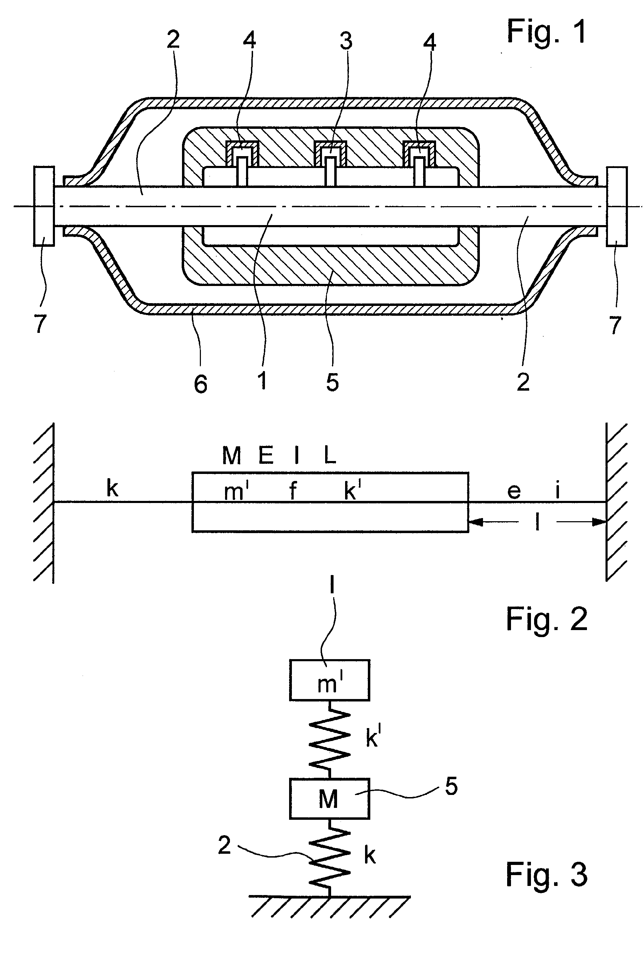

Aus Fig. 1 ist ein nach dem Coriolis-Prinzip arbeitendes Massendurchflußmeßgerät mit einem ein strömendes Medium führenden, geraden Coriolis-Meßrohr 1, mit zwei das strömende Medium führenden, geraden Anschlußrohren 2, mit einem dem Coriolis-Meßrohr 1 zugeordneten und das Coriolis-Meßrohr 1 mit einer Anregungsfrequenz, nämlich einer seiner Eigenfrequenzen im durchflossenen Zustand, anregenden Schwingungserzeuger 3, mit zwei, dem Coriolis-Meßrohr 1 zugeordneten, die Coriolis-Schwingungen erfassenden Meßwertaufnehmern 4 und mit einem Kompensationszylinder 5 ersichtlich. Der Schwingungserzeuger 3 und die Meßwertaufnehmer 4 sind an dem Kompensationszylinder 5 befestigt und wirken von dort auf das Coriolis-Meßrohr 1. Der Kompensationszylinder 5 ist an seinen beiden Endbereichen jeweils mit einem Endbereich des Coriolis-Meßrohrs 1 mechanisch fest verbunden, nämlich mit diesen verschweißt.

Wie aus Fig. 1 ersichtlich, sind das Coriolis-Meßrohr 1 sowie die Anschlußrohre 2 aus einem durchgängigen Rohr gebildet, das Coriolis-Meßrohr 1 geht also an den Stellen, an denen der Kompensationszylinder 5 am Coriolis-Meßrohr 1 befestigt ist "nahtlos" in die Anschlußrohre 2 über. Auf diese Weise sind die Anschlußrohre 2 vollständig außerhalb des Kompensationszylinders 5 angeordnet. Schließlich ist noch ein Gehäuse 6 vorgesehen, das das Coriolis-Meßrohr 1, den Kompensationszylinder 5 mit dem Schwingungserzeuger 3 und den Meßwertaufnehmem 4 sowie die Anschlußrohre 2 umschließt und an den äußeren Endbereichen der Anschlußrohre 2 mechanisch befestigt ist. Zur Befestigung des Massendurchflußmeßgeräts sind an den außenseitigen Endbereichen der Anschlußrohre 2 außerhalb des Gehäuses 6 zwei Flansche 7 vorgesehen.

Das Coriolis-Meßrohr 1 besteht aus Titan und erstreckt sich zusammen mit den Anschlußrohren 2 über eine Länge von 714 mm. Der Außendurchmesser des Coriolis-Meßrohrs 1 sowie der Anschlußrohre 2 beträgt 25,4 mm bei einer Wandstärke von 0,64 mm. Der Kompensationszylinder 5 ist aus Edelstahl ausgebildet, weist eine Länge von 438 mm auf und ist derart an dem Coriolis-Meßrohr 1 befestigt, daß zwei gleich lange Anschlußrohre 2 erzielt werden. Damit ergibt sich eine Länge der Anschlußrohre 2 von jeweils 138 mm. Das Massendurchflußmeßgerät gemäß dem ersten bevorzugten Ausführungsbeispiel der Erfindung ist weiterhin nun derart dimensioniert, daß die Formel

$$\frac{Mf^2}{ei/l^3} > 5.5$$

erfüllt ist, wobei wobei M die Masse des Kompensationszylinders, f die Eigenfrequenz des mit Wasser gefüllten Coriolis-Meßrohrs, e das Elastizitätsmodul der Anschlußrohre, i das Flächenträgheitsmoment der Anschlußrohre und l die Länge der Anschlußrohre ist. Ferner ist auch die Formel

$$\frac{EI/L^3}{ei/l^3} > 12$$

erfüllt, wobei E das Elastizitätsmodul des Kompensationszylinders (5), I das Flächenträgheitsmoment des Kompensationszylinders (5) und L die Länge des Kompensationszylinders (5) ist.

Damit ist gewährleistet, daß die Ankopplung der Einheit, bestehend aus dem Coriolis-Meßrohr 1 und dem Kompensationszylinder 5 sowie dem Schwingungserzeuger 3 und dem Meßwertaufnehmer 4, über die Anschlußrohre 2 an das Rohrleitungssystem, in das das Massendurchflußmeßgerät eingebaut ist, eher "weich" ist. Aufgrund der Befestigung des Kompensationszylinders 5 an den Enden des Coriolis-Meßrohrs 1 kommt es nur zu Anregungs- und Coriolis-Schwingungen des Coriolis-Meßrohrs 1 selbst, und die Anschlußrohre 2 erfahren praktisch keine solchen Schwingungen. Aufgrund der "weich" ausgebildeten Anschlußrohre 2 kommt es ferner zu einer Schwingung des Systems, bestehend aus Coriolis-Meßrohr 1 und Kompensationszylinder 5 sowie Schwingungserzeuger 3 und Meßwertaufnehmer 4, gegenüber dem Rohrleitungssystem, in das das Massendurchflußmeßgerät eingebaut ist, wobei die Eigenfrequenz dieser Schwingung wesentlich geringer ist als die Eigenfrequenz des Coriolis-Meßrohrs 1. Damit wird die Kopplung zwischen dem System, bestehend aus Coriolis-Meßrohr 1, Kompensationszylinder 5, Schwingungserzeuger 3 und Meßwertaufnehmer 4, mit der Umgebung erheblich reduziert.

Schematisch sind die Parameter des Massendurchflußmeßgeräts gemäß dem ersten bevorzugten Ausführungsbeispiel der Erfindung aus Fig. 2 ersichtlich.

Die Schwingungsankopplungen bei dem Massendurchflußmeßgerät gemäß dem bevorzugten Ausführungsbeispiel der Erfindung sind schematisch aus Fig. 3 ersichtlich, nämlich einerseits die Ankopplung des schwingenden Coriolis-Meßrohrs 1 an den Kompensationszylinder 5 und andererseits die Ankopplung des Systems, bestehend aus Coriolis-Meßrohr 1 und Kompensationszylinder 5 an die Umgebung, nämlich an das Rohrleitungssystem, in das das Massendurchflußmeßgerät eingebaut ist. Der Schwingungserzeuger 3 und die Meßwertaufnehmern 4 können aufgrund ihrer geringen Masse für diese Betrachtung vernachlässigt werden.

Bei dem in Fig. 3 dargestellten schematischen Beispiel ist *k* die Federkonstante der Anschlußrohre *2, k' die* Federkonstante des Coriolis-Meßrohrs 1, *m'* die Masse des Coriolis-Meßrohrs 1 und *M*, wie bisher, die Masse des Kompensationszylinders. Erfindungsgemäß ist einerseits gewährleistet, daß die Federkonstante des Coriolis-Meßrohrs 1 viel größer ist als die Federkonstante der Anschlußleitungen 2 und andererseits, daß die Masse des Coriolis-Meßrohrs 1 viel geringer ist als die Masse des Kompensationszylinders 5. Damit kommt es jedoch dazu, daß die Schwingungen der Masse *m'* des Coriolis-Meßrohrs 1 gegen die Masse *M* des Kompensationszylinders 5 über die Anschlußleitung 2 mit der geringen Federkonstante *k* praktisch nicht in die Umgebung einstreuen: Es liegt eine schwingungsmäßige Entkopplung vor.

**Patentansprüche**

1. Massendurchflußmeßgerät, das nach dem Coriolis-Prinzip arbeitet, mit einem ein strömendes Medium führenden, im wesentlichen geraden Coriolis-Meßrohr (1), mit zwei das strömende Medium führenden, im wesentlichen geraden Anschlußrohren (2), mit mindestens einem dem Coriolis-Meßrohr (1) zugeordneten, das Coriolis-Meßrohr (1) anregenden Schwingungserzeuger (3), mit mindestens einem dem Coriolis-Meßrohr (1) zugeordneten, Coriolis-Kräfte und/oder auf Coriolis-Kräften beruhende Coriolis-Schwingungen erfassenden Meßwertaufnehmer (4) und mit einem Kompensationszylinder (5), wobei das Coriolis-Meßrohr (1) innerhalb des Kompensationszylinders (5) angeordnet ist, der Kompensationszylinder (5) an seinen beiden Endbereichen jeweils mit einem Endbereich des Coriolis-Meßrohrs (1) mechanisch fest verbunden ist, das Coriolis-Meßrohr (1) in jedem seiner beiden Endbereiche jeweils in ein Anschlußrohr (2) übergeht, die Anschlußrohre (2) außerhalb des Kompensationszylinders (5) vorgesehen sind und das Massendurchflußmeßgerät mittels an den außenseitigen Endbereichen der Anschlußrohre (2) vorgesehener Befestigungseinrichtungen in ein Rohrleitungssystem einbaubar ist, **dadurch gekennzeichnet, daß** die Formel

$$\frac{Mf^2}{ei/l^3}>5.5$$

für jedes Anschlußrohr (2) erfüllt ist, wobei *M* die Masse des Kompensationszylinders (5), *f* die Eigenfrequenz des mit Wasser gefüllten Coriolis-Meßrohrs, *e* das Elastizitätsmodul der Anschlußrohre (2), *i* das Flächenträgheitsmoment der Anschlußrohre (2) und *l* die Länge der Anschlußrohre (2) ist.

2. Massendurchflußmeßgerät nach Anspruch 1, **dadurch gekennzeichnet, daß** die Formel

$$\frac{EI/L^3}{ei/l^3}>12$$

für jedes Anschlußrohr (2) erfüllt ist, wobei E das Elastizitätsmodul des Kompensationszylinders (5), I das Flächenträgheitsmoment des Kompensationszylinders (5) und L die Länge des Kompensationszylinders (5) ist.

3. Massendurchflußmeßgerät nach Anspruch 1 oder 2, **dadurch gekennzeichnet, daß** ein Gehäuse (6) vorgesehen ist, das das Coriolis-Meßrohr (1), den Kompensationszylinder (5) und die Anschlußrohre (2) umschließt und an den äußeren Endbereichen der Anschlußrohre (2) mechanisch fest angebracht ist.

4. Massendurchflußmeßgerät nach Anspruch 4, **dadurch gekennzeichnet, daß** zwischen dem Kompensationszylinder (5) und dem Gehäuse (6) keine Verbindung vorgesehen ist.

5. Massendurchflußmeßgerät nach einem der Ansprüche 1 bis 4, **dadurch gekennzeichnet, daß** der Innendurchmesser, die Wandstärke und das Material des Coriolis-Meßrohrs (1) dem Innendurchmesser, der Wandstärke und dem Material der Anschlußrohre (2) entspricht.

6. Massendurchflußmeßgerät nach einem der Ansprüche 1 bis 5, **dadurch gekennzeichnet, daß** die an den außenseitigen Endbereichen der Anschlußrohre (2) vorgesehenen Befestigungseinrichtungen, mit denen das Massendurchflußmeßgerät in das Rohrleitungssystem einbaubar ist, als Flansche (7) ausgebildet sind.

Fig. 1

Fig. 2

Fig. 3